Europäisches Patentamt

European Patent Office

Office européen des brevets

(19)

(11) Veröffentlichungsnummer: **0 274 683 B1**

(12) **EUROPÄISCHE PATENTSCHRIFT**

(45) Veröffentlichungstag der Patentschrift: **17.07.91**

(21) Anmeldenummer: **87118376.0**

(22) Anmeldetag: **11.12.87**

(51) Int. Cl.⁵: **A47B 88/00**, F16B 12/42

(54) Verbindungsbeschlag zur Befestigung der Reling einer Schublade.

<table>
<tr><td>(30) Priorität: 08.01.87 AT 19/87</td><td>(73) Patentinhaber: <b>Julius Blum Gesellschaft m.b.H.</b><br><b>Industriestrasse 1</b><br><b>A-6973 Höchst(AT)</b></td></tr>
<tr><td>(43) Veröffentlichungstag der Anmeldung:<br><b>20.07.88 Patentblatt 88/29</b></td><td></td></tr>
<tr><td>(45) Bekanntmachung des Hinweises auf die<br>Patenterteilung:<br><b>17.07.91 Patentblatt 91/29</b></td><td>(72) Erfinder: <b>Röck, Erich</b><br><b>Küferstrasse 7</b><br><b>A-6973 Höchst(AT)</b><br>Erfinder: <b>Hollenstein, Helmut</b><br><b>Bildgasse 7</b><br><b>A-6890 Lustenau(AT)</b></td></tr>
<tr><td>(84) Benannte Vertragsstaaten:<br><b>AT CH DE FR GB IT LI SE</b></td><td></td></tr>
<tr><td>(56) Entgegenhaltungen:<br><b>EP-A- 0 124 059    WO-A-85/05541</b><br><b>CH-A- 389 850    US-A- 3 378 219</b><br><b>US-A- 3 752 553    US-A- 4 219 247</b></td><td>(74) Vertreter: <b>Torggler, Paul, Dr. et al</b><br><b>Wilhelm-Greil-Strasse 16</b><br><b>A-6020 Innsbruck(AT)</b></td></tr>
</table>

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung bezieht sich auf einen Verbindungsbeschlag zur Befestigung der Reling einer Schublade an einer Frontblende oder Schubladenrückwand, wobei die Reling mit einem Haken versehen ist.

Eine Schublade dieser Art ist in der US-A-42 19 247 beschrieben. Dabei ist jedoch die Reling in einen Sockel eingehängt, der mit der Frontblende verschraubt ist.

Die WO-A-85 05 541 zeigt eine Reling, die seitlich an die Frontblende angeschraubt ist.

Im modernen Möbelbau sind Schubladen hinlänglich bekannt, bei denen die Frontplatte mittels Schnellspannvorrichtungen an den Schubladenzargen, d. h. an den Möbelseitenwänden, verstellbar befestigt werden kann. In manchen Fällen ist an der Schublade oberhalb jeder Schubladenseitenwand eine Reling vorgesehen, die sich von der Frontplatte bis zur Möbelrückwand bzw. einer an der Möbelrückwand befestigten Stütze erstreckt.

In der älteren europäischen Patentanmeldung 84104565.1 (Veröffentlichungsnr. 0 124 059) der gleichen Anmelderin wurde vorgeschlagen, diese Reling zur Verstellung der Frontplattenneigung heranzuziehen. Dabei ist die Reling mit einem Gewindezapfen versehen, der in einen in die Frontblende einsetzbaren Halteteil einschraubbar ist.

Weiters sind ganz allgemein Möbelverbinder mit dübelartigen Gehäusen bekannt, die eine spannende Verbindung der Möbelteile ermöglichen.

Aufgabe der Erfindung ist es, einen Verbindungsbeschlag zu schaffen, der das schnelle Einhängen einer Reling in die Frontblende oder Schubladenrückwand einer Schublade ermöglicht.

Dies wird erfindungsgemäß durch ein in die Frontblende od. dgl. eingesetztes Dübelgehäuse, in das ein mit der Reling verbundener oder an dieser angeformter Hakenteil mit dem Haken eingehängt ist, wobei der Hakenteil durch eine Öffnung ins Dübelgehäuse ragt, erreicht.

Der erfindungsgemäße Dübeltopf ist leicht und schnell ohne Schrauben zu montieren. Auf eine besondere Ausrichtung muß nicht geachtet werden. Außerdem wird der Beschlag zur Gänze in der Frontblende aufgenommen. Vorteilhaft ist vorgesehen, daß in das Dübelgehäuse, welches aus Kunststoff gefertigt ist, eine metallische Scheibe eingesetzt ist, die eine Öffnung aufweist, durch welche der Hakenteil mit seinem Kopf ragt.

Durch die metallische Scheibe können die vom Haken ausgeübten Kräfte großflächig abgeleitet werden.

Ein Ausführungsbeispiel der Erfindung sieht vor, daß der Hakenteil mit einem Flansch versehen ist, welcher in Montagelage bündig an dem Dübelgehäuse anliegt und dem Haken gegenüberliegend abgeschrägt ist.

Dadurch ist die Reling bzw. der Hakenteil im eingehängten Zustand satt am Dübelgehäuse gehalten und dennoch ist ein leichtes Ein- und Aushängen des Hakenteiles möglich.

Der Halt der Reling wird in einem Ausführungsbeispiel der Erfindung dadurch verbessert, daß der Hakenteil einen zylindrischen Ansatz aufweist, der satt in der Öffnung des Dübelgehäuses aufgenommen ist.

Nachfolgend wird ein Ausführungsbeispiel der Erfindung anhand der Figuren der beiliegenden Zeichnungen eingehend beschrieben.

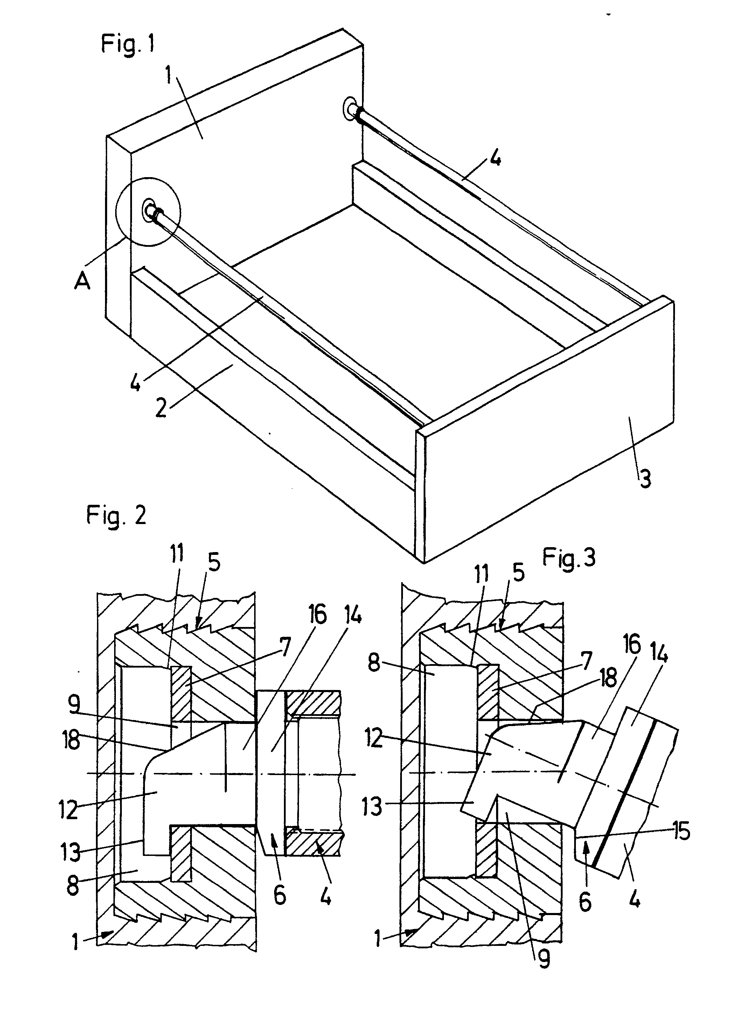

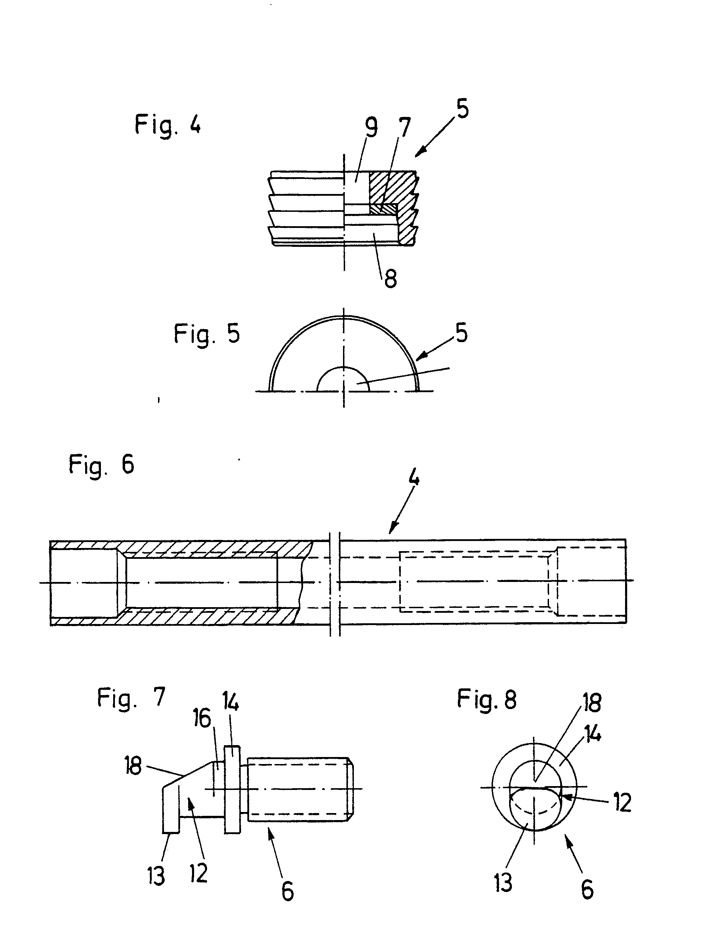

Die Fig. 1 zeigt ein schematisch gehaltenes Schaubild einer erfindungsgemäßen Schublade, die Fig. 2 zeigt einen Vertikalschnitt durch einen erfindungsgemäßen Verbindungsbeschlag mit eingehängter Reling, die Fig. 3 zeigt einen Vertikalschnitt eines erfindungsgemäßen Verbindungsbeschlages, wobei der Hakenteil in einer Zwischenstellung während des Ein- bzw. Aushängens gezeigt ist, die Fig. 4 zeigt eine Seitenansicht auf das erfindungsgemäße Dübelgehäuse teilweise im Schnitt, Die Fig. 5 zeigt eine Draufsicht auf das erfindungsgemäße Dübelgehäuse, die Fig. 6 zeigt eine Seitenansicht der Reling teilweise im Schnitt, die Fig. 7 zeigt eine Seitenansicht des Hakenteiles und die Fig. 8 zeigt eine Stirnansicht des Hakenteiles.

In den Figuren der Zeichnung ist die Frontblende mit 1, die Schubladenrückwand mit 3 und die Schubladenzargen sind mit 2 bezeichnet.

An jeder Seite der Schublade ist eine Reling 4 angeordnet. An der Frontblende 1 ist jede Reling 4 mit einem erfindungsgemäßen Verbindungsbeschlag befestigt.

Der erfindungsgemäße Verbindungsbeschlag besteht aus einem in die Frontblende 1 einsetzbaren Dübelgehäuse 5 und einem in die Reling 4 eingeschraubten Hakenteil 6. Der Hakenteil 6 ist vorteilhaft aus Druckguß gefertigt, kann jedoch auch ein Kunststoffteil sein.

Das Dübelgehäuse 5 ist aus Kunststoff gespritzt. Das Dübelgehäuse 5 weist einen Hohlraum 8 und eine mittige Öffnung 9 auf. In den Hohlraum 8 ist eine metallische Scheibe 7 eingesetzt. Die metallische Scheibe 7 ist in einer Hinterschneidung 10 von einem Vorsprung oder Vorsprüngen 11 gehalten.

Der Hakenteil 6 weist einen Kopf 12 mit einem Haken 13 auf.

Um das Einführen des Kopfes 12 in die Öffnung 9 zu ermöglichen, ist der Kopf 12 mit einer Abschrägung 18 versehen. zur Befestigung der Reling 4 wird zuerst das Dübelgehäuse 5 in die Frontblende 1 in herkömmlicher Art und Weise eingeschlagen und der Hakenteil 6 in die Reling 4 eingeschraubt bzw. in diese eingesteckt. Daraufhin ist die Reling 4 mit dem Hakenteil 6 in der in der Fig. 3 gezeigten Art und Weise durch die Öffnung 9 in das Dübelgehäuse 5 einhängbar, sodaß der Haken 13, wie in der Fig. 2 gezeigt, hinter der metallischen Scheibe 7 zu liegen kommt.

Der Hakenteil 6 weist einen Flansch 14 auf, der satt am Dübelgehäuse 5 anliegt, und zwar an dessen Stirnseite. Damit der Flansch 14 das Ein- und Aushängen des Hakenteiles 6 nicht behindert, ist er dem Haken 13 gegenüberliegend mit einer Abschrägung 15 versehen.

Damit ein Wackeln der Reling 4 sicher verhindert wird, ist der Hakenteil mit einem zylindrischen Ansatz 16 versehen, der satt in der Öffnung 9 des Dübelgehäuses 5 aufgenommen ist.

Das Dübelgehäuse 5 weist in herkömmlicher Art und Weise an seinem Umfang Rippen 17 auf, die die Verankerung des Dübelgehäuses 5 in der Frontblende 1 verbessern.

## Patentansprüche

1. Verbindungsbeschlag zur Befestigung der Reling einer Schublade an einer Frontblende oder Schubladenrückwand, wobei die Reling mit einem Haken versehen ist, gekennzeichnet durch ein in die Frontblende (1) od. dgl. eingesetztes Dübelgehäuse (5), in das ein mit der Reling (4) verbundener oder an dieser angeformter Hakenteil (6) mit dem Haken (13) eingehängt ist, wobei der Hakenteil (6) durch eine Öffnung (9) ins Dübelgehäuse (5) ragt.

2. Verbindungsbeschlag nach Anspruch 1, dadurch gekennzeichnet, daß in das Dübelgehäuse (5), welches aus Kunststoff gefertigt ist, eine metallische Scheibe (7) eingesetzt ist, die eine Öffnung aufweist, durch welche der Hakenteil (6) mit seinem Kopf (12) ragt.

3. Verbindungsbeschlag nach Anspruch 1, dadurch gekennzeichnet, daß der Hakenteil (6) mit einem Flansch (14) versehen ist, welcher in Montagelage bündig an dem Dübelgehäuse (5) anliegt und dem Haken (13) gegenüberliegend abgeschrägt ist.

4. Verbindungsbeschlag nach Anspruch 1, dadurch gekennzeichnet, daß der Hakenteil (6) einen zylindrischen Ansatz (16) aufweist, der satt in der Öffnung (9) des Dübelgehäuses (5) aufgenommen ist.

## Claims

1. Connecting fitting for securing a drawer rail on a front panel or rear wall of a drawer, the rail being provided with a hook, characterised by a dowel housing (5) inserted in the front panel (1) or the like, in which there is suspended by means of the hook (13) a hooking part (6) connected to the rail (4) or integrally formed thereon, the hooking part (6) projecting through an opening (9) into the dowel housing (5).

2. Connecting fitting in accordance with Claim 1, characterised in that there is inserted in the dowel housing (5), which is made of synthetic material, a metal disc (7) which has an opening through which the hooking part (6) projects by means of its head (12).

3. Connecting fitting in accordance with Claim 1, characterised in that the hooking part (6) is provided with a flange (14) which in the assembled position bears flush against the dowel housing (5) and is slanted with respect to the hook (13).

4. Connecting fitting in accordance with Claim 1, characterised in that the hooking part (6) has a cylindrical attachment piece (16) which is snugly received in the opening (9) of the dowel housing (5).

## Revendications

1. Ferrures d'assemblage pour fixer la barrette d'un tiroir sur un panneau frontal ou sur une paroi arrière de tiroir, la barrette étant équipée d'un crochet, caractérisées par un boîtier de cheville (5) qui est mis en place dans le panneau frontal (1) ou analogue et dans lequel une pièce à crochet (6) reliée ou moulée sur la barrette (4) est suspendue par le crochet (13), la pièce à crochet (6) faisant saillie par une ouverture (9) dans le boîtier de cheville (5).

2. Ferrures selon la revendication 1, caractérisées en ce qu'une rondelle métallique (7) est mise en place dans le boîtier de cheville (5) qui est en matière plastique, la rondelle présentant une ouverture dans laquelle la pièce à crochet (6) fait saillie par sa tête (12).

3. Ferrures d'assemblage selon la revendication 1, caractérisées en ce que la pièce à crochet (6) est munie d'une bride (14) qui, en position de montage, repose au ras du boîtier de cheville (5) et est biseautée en face du crochet (13).

4. Ferrures d'assemblage selon la revendication 1, caractérisées en ce que la pièce à crochet (6) présente une saillie cylindrique (16) qui est logée pleinement dans l'ouverture (9) du boîtier de cheville (5).

Fig. 1

Fig. 2

Fig. 3

Fig. 4

Fig. 5

Fig. 6

Fig. 7

Fig. 8